# EUROPÄISCHE PATENTSCHRIFT

(11) **EP 3 618 676 B1**
(45) Veröffentlichungstag und Bekanntmachung des Hinweises auf die Patenterteilung: **20.09.2023**
(21) Anmeldenummer: 17721159.6
(22) Anmeldetag: 04.05.2017
(51) Int. Cl.: A47L 9/28

(54) **BODENREINIGUNGSGERÄT UND VERFAHREN ZUM REINIGEN EINER BODENFLÄCHE**
FLOOR CLEANING DEVICE AND METHOD FOR CLEANING A FLOOR SURFACE
APPAREIL DE NETTOYAGE DE SOL ET MÉTHODE DE NETTOYAGE D'UNE SURFACE AU SOL

(43) Veröffentlichungstag der Anmeldung: 11.03.2020
(73) Patentinhaber: Alfred Kärcher SE & Co. KG, 71364 Winnenden (DE)
(72) Erfinder: WENZEL, Karl Engelbert, 73663 Berglen (DE)
(74) Vertreter: DTS Patent- und Rechtsanwälte Schnekenbühl und Partner mbB
(86) Internationale Anmeldenummer: PCT/EP2017/060644
(87) Internationale Veröffentlichungsnummer: WO 2018/202301

(56) Entgegenhaltungen:
- EP-A1- 1 677 099
- WO-A1-2016/045593
- DE-A1-102015 104 250
- DE-A1-102015 112 174
- US-A1- 2005 166 354

## Beschreibung

Die Erfindung betrifft ein Bodenreinigungsgerät, das mindestens ein Reinigungsaggregat zum Reinigen einer Bodenfläche und eine optische Detektionseinrichtung umfasst, mit der ein Bodentyp ermittelbar ist, wobei die Detektionseinrichtung als Spektroskopieeinrichtung ausgestaltet ist oder eine solche umfasst, mit der der Bodentyp anhand eines in Reflexion aufgenommenen Spektrums der Bodenfläche ermittelbar ist, und wobei die Spektroskopieeinrichtung mindestens ein optisches Leuchtelement zur Emission von auf die Bodenfläche gerichtetem Licht aufweist.

Außerdem betrifft die Erfindung ein Verfahren zum Reinigen einer Bodenfläche mit einem Bodenreinigungsgerät.

Bei Bodenreinigungsgeräten, speziell selbstfahrenden und selbstlenkenden Bodenreinigungsgeräten zum autonomen Reinigen einer Bodenfläche, ist es bekannt, den Bodentyp anhand einer optischen Detektionseinrichtung zu ermitteln. Beispielsweise beschreibt die DE 10 2013 113 426 A1, dass fotografische Aufnahmen der Bodenfläche erstellt werden, die mittels Methoden der Bildverarbeitung zur Ermittlung des Bodentyps ausgewertet werden. Es zeigt sich, dass eine Feststellung des Bodentyps mittels fotografischer Aufnahmen häufig aufgrund der Umgebung, beispielsweise Lichteinfall und damit verbundener Streuung und Reflexion an der Bodenfläche, fehlerbehaftet ist.

Weitere Bodenreinigungsgeräte mit optischen Detektionseinrichtungen sind in der WO 2017/031365 A1 und in der US 2005/0166354 A1 beschrieben. Die WO 2017/031364 A1 beschreibt, wie festgestellt werden kann, ob nach der Reinigung auf der Bodenfläche Wasser verbleibt.

Die DE 10 2015 112 174 A1 beschreibt einen Reinigungsroboter zur Bearbeitung einer Oberfläche, aufweisend eine Detektionseinrichtung zur Erkennung der Art der Oberfläche. Die Detektionseinrichtung weist eine Lichtquelle zur Bestrahlung der Oberfläche mit Licht und einen Sensor zur Detektion des von der Oberfläche reflektierten Lichtes auf. Dem Sensor ist eine dreidimensionale, mehrere Teilvolumina ausbildende Blendenkulisse zugeordnet. Jedes Teilvolumen ist jeweils einer anderen Sensorteilfläche des Sensors zugeordnet. Dabei sind benachbarte Sensorteilflächen mittels der Blendenkulisse optisch so voneinander getrennt, dass ein Übertritt von Licht aus einem ersten Teilvolumen in ein zweites Teilvolumen verhindert wird. In den unterschiedlichen Teilvolumina können unterschiedliche Oberflächenparameter, beispielsweise ein Glanz, eine Farbe und/oder eine Textur bestimmt werden. In einem Teilvolumen wird zum Beispiel ein wellenlängenabhängiges Reflexionsmaximum, Reflexionsspektrum oder ähnliches ausgewertet, um auf die Art der Oberfläche zu schließen.

Aufgabe der vorliegenden Erfindung ist es, ein Bodenreinigungsgerät der eingangs genannten Art und ein Verfahren zur Bodenreinigung bereitzustellen, mit bzw. bei dem eine zuverlässigere Ermittlung des Bodentyps möglich ist.

Diese Aufgabe wird bei einem gattungsgemäßen Bodenreinigungsgerät erfindungsgemäß mit den Merkmalen des kennzeichnenden Teils des neuen Anspruches 1 gelöst.

Das erfindungsgemäße Bodenreinigungsgerät erlaubt es, den Bodentyp spektroskopisch festzustellen. Dabei kann ein Spektrum der Bodenfläche aufgenommen werden. Abhängig von der Intensität oder Signalstärke als Funktion einer Wellenlänge oder Energie bzw. Frequenz eingesetzten Lichtes kann durch eine quantitative Analyse eine spektrale Signatur der unterschiedlichen Bodentypen aufgefunden werden. Durch die spektrale Analyse ist die Bestimmung des Bodentyps weitgehend unabhängig von äußeren Einflüssen wie Umgebungslicht. In der Praxis zeigt es sich, dass auf diese Weise eine zuverlässige Ermittlung des Bodentyps möglich ist.

"In Reflexion" schließt vorliegend den Fall mit ein, dass von der Spektroskopieeinrichtung auf die Bodenfläche gerichtetes Licht von dieser gestreut und von der Spektroskopieeinrichtung detektiert wird.

Das aufgenommene Spektrum der Bodenfläche kann hinsichtlich Wellenlänge und/oder Energie bzw. Frequenz des Lichtes kalibriert sein. Es kann auch vorgesehen sein, dass die Wellenlänge oder Energie bzw. Frequenz nicht kalibriert ist und anhand von Kanälen (Bins) eines Zeilen- oder Felddetektors festgestellt wird.

In entsprechender Weise kann die Intensität oder Signalstärke des Spektrums kalibriert oder nicht kalibriert sein. Die spektrale Sensitivität eines Empfangselementes kann zur Auswertung des Spektrums herangezogen werden. Möglich ist auch, dass lediglich die Zählrate (Counts) abhängig von einer vorgegebenen Wellenlänge oder Energie bzw. Frequenz bei der Untersuchung charakteristischer Strukturen des Spektrums herangezogen wird.

Günstig ist es, dass die Spektroskopieeinrichtung mindestens ein optisches Leuchtelement zur Emission von auf die Bodenfläche gerichtetem Licht aufweist und mindestens ein diffraktives oder refraktives Element zur spektralen Zerlegung reflektierten Lichtes, das mittels mindestens eines Empfangselementes detektierbar ist. Das Empfangselement kann beispielsweise ein Zeilen-oder Felddetektor sein. Vorteilhafterweise kommt zur Unterdrückung von Umgebungslicht eine Blende zum Einsatz, die schlitzförmig oder lochförmig ausgestaltet sein kann.

Von Vorteil ist es, dass zur Auswertung des Spektrums charakteristische Merkmale desselben anhand einer relativen Intensität und/oder Position von zwei oder mehr charakteristischen Strukturen zueinander festgestellt werden.

Als vorteilhaft erweist es sich, wenn abhängig vom ermittelten Bodentyp zumindest eines der Folgenden vom Bodenreinigungsgerät zur Anpassung der Reinigung an die Bodenfläche einstellbar ist:
- Reinigungsparameter wie Einsatz und/oder Art mindestens eines Reinigungsaggregates, Reinigungsintensität, Menge und/oder Art von Reinigungsmittel(n). Das Bodenreinigungsgerät kann zum Beispiel unterschiedliche Reinigungsaggregate aufweisen, die je nach Bodentyp einzeln oder in Kombination miteinander zum Einsatz kommen. Die Reinigungsintensität mindestens eines Reinigungsaggregates kann eingestellt werden, beispielsweise die Drehzahl einer Reinigungsbürste oder die Saugleistung eines Saugaggregates. Kommt mindestens ein Reinigungsmittel zum Einsatz, beispielsweise zur Benetzung der Bodenfläche, kann die Menge und/oder die Art des Reinigungsmittels angepasst werden. Die Reinigungsflüssigkeit ist insbesondere Wasser, es kann allerdings auch die Dosierung einer Reinigungschemikalie abhängig vom Bodentyp erfolgen.
- Verfahrparameter wie Fahrgeschwindigkeit des Bodenreinigungsgerätes, Fahrstrecke, Fahrmuster, Umfahren oder Vermeiden von Bodenflächenbereichen mit vorgegebenem Bodentyp. Je nach ermitteltem Bodentyp kann die Geschwindigkeit des Bodenreinigungsgerätes und dessen Fahrstrecke angepasst werden. Das Fahrmuster, beispielsweise ein Mäandermuster, ein Spiralmuster oder dergleichen, kann abhängig vom Bodentyp eingesetzt werden. Wird ein Bodentyp erkannt, der mit dem Bodenreinigungsgerät nicht überfahren werden soll, kann die Fahrstrecke zum Umfahren eines Bodenflächenbereiches angepasst werden. Es kann auch vorgesehen sein, dass der Bodenflächenbereich mit vorgegebenem Bodentyp überfahren wird, jedoch keine Reinigung erfolgt.

Es versteht sich, dass die vorstehend erwähnte Anpassung der Reinigung an die Bodenfläche insbesondere bei einem selbstfahrenden und selbstlenkenden Bodenreinigungsgerät zur autonomen Reinigung der Bodenfläche zum Einsatz kommen kann. Eine Steuereinheit eines derartigen Bodenreinigungsgerätes kann Bestandteil der Spektroskopieeinrichtung sein oder umgekehrt.

Alternativ oder ergänzend kann vorgesehen sein, dass das Bodenreinigungsgerät ein handgeführtes Bodenreinigungsgerät ist, das von einer Bedienperson geführt wird (walk-behind oder ride-on).

Günstigerweise ist, insbesondere bei handgeführten Bodenreinigungsgeräten, an einer Hinweiseinheit eine Information an eine Bedienperson betreffend den Bodentyp ausgebbar. Die Bedienperson kann das Bodenreinigungsgerät auf den Hinweis zur Anpassung der Reinigung an die Bodenfläche einstellen und/oder etwaige selbsttätig vom Bodenreinigungsgerät vorgenommene Einstellungen überprüfen. Die Hinweiseinheit kann insbesondere optisch als Anzeigeeinheit und/oder akustisch als Lautsprechereinheit ausgestaltet sein.

Von Vorteil ist es, wenn zur Auswertung des Spektrums charakteristische Merkmale desselben anhand mindestens eines der Folgenden festgestellt werden:
- Auftreten charakteristischer Strukturen bei vorgegebener Energie und/oder Wellenlänge;
- absolute Intensität mindestens einer charakteristischen Struktur;
- Form mindestens einer charakteristischen Struktur.

Vorzugsweise ist mindestens ein Leuchtelement der Spektroskopieeinrichtung, bezogen auf eine Hauptbewegungsrichtung des Bodenreinigungsgerätes, an dessen Vorderseite angeordnet, zur Ermittlung des Bodentyps eines in der Hauptbewegungsrichtung vorgelagerten Bereiches der Bodenfläche. Beim Bewegen des Bodenreinigungsgerätes wird dadurch der Bodentyp an der Vorderseite oder vor dem Bodenreinigungsgerät liegend ermittelt. Abhängig hiervon kann das Bodenreinigungsgerät hinsichtlich Reinigungsparametern und/oder Verfahrparametern unmittelbar angepasst werden.

Beim erfindungsgemäßen Bodenreinigungsgerät besteht die Möglichkeit, mit der Spektroskopieeinrichtung den Bodentyp zu erkennen. Beispielsweise kann als Bodentyp ein Boden mit Kunststoffbelag, Parkett, Laminat, Fliesenbelag oder Teppichbelag ermittelt werden.

Günstig ist, wenn der Bodentyp durch Bestimmung des Bodenmaterials ermittelbar ist. Über das anhand des Spektrums bestimmbare Bodenmaterial kann auf den Bodentyp geschlossen werden. Dabei ist es insbesondere von Vorteil, wenn unterschiedliche Materialien von Parkett, Fliesenbelag, Laminat, Kunststoffbelag und/oder Teppichbelag voneinander unterschieden werden können.

Zur Ermittlung des Bodentyps können weitere Beschaffenheiten der Bodenfläche anhand des Spektrums abgeleitet werden, zum Beispiel Rauheit oder Härte anhand absoluter Intensität einer charakteristischen Struktur oder relativer Intensitäten mehrerer charakteristischer Strukturen.

In einer Speichereinheit des Bodenreinigungsgerätes können mit einem jeweiligen Bodentyp und insbesondere Bodenmaterial verknüpft Informationen über die jeweils zu erwartenden charakteristischen Strukturen gespeichert sein. Durch Vergleich mit dem Ergebnis der Auswertung kann der Bodentyp vorzugsweise eindeutig ermittelt werden.

Ein Element zur spektralen Zerlegung von Licht kann bei einer vorteilhaften Ausführungsform zum Beispiel dann entfallen, wenn das Spektrum des Leuchtelementes schmalbandig genug ist, um eine Identifizierung des Bodentyps zu ermöglichen. Das Bodenreinigungsgerät kann in diesem Fall ein Leuchtelement zur Emission von gerichtetem, strukturierten Licht aufweisen.

Vorzugsweise umfasst die Spektroskopieeinrichtung mindestens ein Sende-und Empfangsmodul, das das mindestens eine Leuchtelement, das mindestens eine Empfangselement und das mindestens eine diffraktive oder refraktive Element in einem gemeinsamen Gehäuse angeordnet umfasst. Dadurch kann eine einfache konstruktive Ausgestaltung erzielt werden. Das Sende- und Empfangsmodul ist zum Beispiel als vorgefertigte Baueinheit bereitgestellt, die an oder in einer entsprechenden Aufnahme des Bodenreinigungsgerätes festgelegt ist oder festgelegt werden kann. Der Eintrag von Streulicht kann durch Anordnung des Empfangselementes im Gehäuse unterdrückt werden.

Bevorzugt ist das mindestens eine Leuchtelement eine Leuchtdiode oder umfasst eine solche.

Als vorteilhaft erweist es sich in der Praxis, wenn als diffraktives Element ein optisches Transmissionsgitter oder Reflexionsgitter oder als refraktives Element ein Prisma vorgesehen ist.

Das mindestens eine Leuchtelement, insbesondere eine Leuchtdiode, ist vorteilhafterweise zur Emission von Licht im UV-Bereich, im Bereich des sichtbaren Spektrums und/oder im NIR-Bereich (Nahinfrarot-Bereich) ausgebildet. Der Einsatz kostengünstiger Technologien ist insbesondere bei Einsatz von NIR-Leuchtdioden mit einer Wellenlänge von ungefähr 700 nm bis 1100 nm möglich. Auch im Bereich der Empfangselemente können hierbei kostengünstige Zeilen- oder Felddetektoren zum Einsatz kommen.

Das mindestens eine Leuchtelement kann schmalbandig oder breitbandig emittieren. Das von der Spektroskopieeinrichtung emittierte Licht kann ein diskretes Spektrum sein oder ein kontinuierliches Spektrum.

Bei einer vorteilhaften Umsetzung erweist es sich als günstig, wenn eine Mehrzahl von Leuchtelementen vorgesehen ist, die Licht unterschiedlicher Wellenlänge emittieren. Dies gibt die Möglichkeit, mehrere diskrete oder teilüberlappende Spektren bereitzustellen und dadurch umfassende Informationen über den Bodentyp zu gewinnen.

Bevorzugt ist eine Mehrzahl von ringförmig angeordneten Leuchtelementen vorgesehen, die Licht auf einen zentral zwischen ihnen gelegenen Bereich der Bodenfläche emittieren. Hierbei können unterschiedliche Leuchtelemente zum Einsatz kommen, die Licht unterschiedlicher Wellenlänge emittieren, oder identische Leuchtelemente. Die Emission auf den zentral gelegenen Bereich stellt sicher, dass möglichst umfassende Informationen über den Bodentyp eines Bodenflächenbereiches gewonnen werden, auf den von allen Leuchtelementen Licht emittiert wird.

Die Spektroskopieeinrichtung umfasst vorteilhafterweise eine Speichereinheit oder ist mit einer Speichereinheit gekoppelt, in der mit einem jeweiligen Bodentyp und insbesondere Bodenmaterial verknüpft Informationen gespeichert sind, durch deren Vergleich mit dem Spektrum oder charakteristischen Merkmalen desselben der Bodentyp ermittelbar ist. Die Speichereinheit kann intern im Bodenreinigungsgerät oder extern zu diesem angeordnet sein. In der Speichereinheit können Referenzspektren verschiedener Bodentypen und insbesondere Bodenmaterialien gespeichert sein. Durch Vergleich eines ermittelten Spektrums mit einem Referenzspektrum kann auf den Bodentyp geschlossen werden. Alternativ oder ergänzend können in der Speichereinheit Informationen zu charakteristischen Strukturen mit einem jeweiligen Bodentyp und insbesondere Bodenmaterialien verknüpft gespeichert sein.

Von Vorteil ist es, wenn das Bodenreinigungsgerät eine Lokalisierungseinheit zum Ermitteln der Position des Bodenreinigungsgerätes relativ zur Bodenfläche und wenn in der Speichereinheit eine Karte der Bodenfläche verknüpft mit einer positionsabhängigen Information zum Bodentyp gespeichert oder speicherbar ist. Anhand der Karte der Bodenfläche kann das Bodenreinigungsgerät selbsttätig auf der Bodenfläche navigieren oder eine Bedienperson bei der Navigation unterstützen. Die dem Fachmann geläufigen Navigationsverfahren können zum Einsatz kommen. Von Vorteil ist es, dass positionsabhängig der Bodentyp in der Karte gespeichert wird. Beispielsweise wird hinterlegt, welche Bereiche der Bodenfläche welchen Bodentyp aufweisen. Dies gibt die Möglichkeit, die Reinigung der Bodenfläche bereits mit a priori-Kenntnis über den Bodentyp durchzuführen. Zusätzlich kann eine Ermittlung des Bodentyps gemäß der vorliegenden Erfindung erfolgen. Dies erlaubt es, eine Überprüfung der in der Speichereinheit hinterlegten Informationen durchzuführen und gegebenenfalls diese Informationen zu korrigieren. Liegt in der Speichereinheit noch keine Information über den Bodentyp vor, kann bei erstmaliger Ermittlung des Bodentyps eine entsprechende Information positionsabhängig mit der Bodenfläche verknüpft gespeichert werden.

Günstig ist es, wenn das Bodenreinigungsgerät mindestens eine Kamera zum Erstellen von Bildern der Bodenfläche umfasst und wenn anhand der Bilder der Bodentyp ermittelbar und auf Übereinstimmung mit dem anhand der Spektroskopieeinrichtung ermittelten Bodentyp überprüfbar ist. Die von der Kamera erstellten Bilder liefern redundante Information, mit der eine Plausibilitätsprüfung durchgeführt werden kann. Der Bodentyp kann auf diese Weise noch zuverlässiger im Hinblick auf eine optimierte Reinigung der Bodenfläche ermittelt werden.

Mindestens eine Kamera ist vorteilhafterweise auf einen, bezogen auf die Hauptbewegungsrichtung des Bodenreinigungsgerätes, dem Bodenreinigungsgerät vorgelagerten Bereich der Bodenfläche gerichtet. Während der Fahrt des Bodenreinigungsgerätes gewonnene Informationen können dadurch zur unmittelbaren Anpassung der Reinigung genutzt werden.

Günstigerweise ist mittels der Spektroskopieeinrichtung die Position, Menge und/oder Art einer Verschmutzung der Bodenfläche anhand einer spektralen Signatur der Verschmutzung ermittelbar. Zusätzlich zum Bodentyp wird vorteilhafterweise mittels der Spektroskopieeinrichtung festgestellt, ob und in welcher Weise die Bodenfläche verschmutzt ist. Eine Anpassung der Reinigung an die Verschmutzung ist möglich, wie vorstehend erläutert, insbesondere durch Anpassung von Reinigungsparametern und/oder Verfahrparametern.

Eine Position, Menge und/oder Art einer Verschmutzung kann vorteilhafterweise unter Einsatz mindestens einer Kamera des Bodenreinigungsgerätes festgestellt werden, die Bilder von der Bodenfläche erstellt, welche Bilder mittels Methoden der Bildverarbeitung auf Vorhandensein von Verschmutzungen untersucht werden. Vorzugsweise erfolgt eine Überprüfung der Informationen über die Verschmutzung, gewonnen anhand von Bildern der Kamera und der spektralen Signatur der Verschmutzung, ermittelt anhand der Spektroskopieeinrichtung. Die Bodenreinigung kann dadurch optimiert werden, indem beispielsweise Reinigungsparameter und/oder Verfahrparameter angepasst werden.

Es kann vorgesehen sein, dass eine Detektionseinrichtung und/oder eine Kamera zum Erstellen von Bildern der Bodenfläche, bezogen auf eine Hauptbewegungsrichtung des Bodenreinigungsgerätes, dem mindestens einen Reinigungsaggregat nachgelagert angeordnet ist, um anhand der Position, Menge und/oder Art einer möglichen Verschmutzung und/oder von Reinigungsmittelrückständen das Reinigungsergebnis zu überprüfen. Wird nach der Reinigung eine Restverschmutzung der Bodenfläche oder ein Reinigungsmittelrückstand, beispielsweise Wasser, festgestellt, kann eine erneute Reinigung durchgeführt werden. Alternativ oder ergänzend kann eine Bedienperson auf die verbleibende Verschmutzung oder den Rückstand hingewiesen werden. Die Detektionseinrichtung und/oder die Kamera ist insbesondere an einer Rückseite des Bodenreinigungsgerätes angeordnet.

Wie bereits erwähnt, kann das Bodenreinigungsgerät ein selbstlenkendes und selbstfahrendes Bodenreinigungsgerät sein. Alternativ oder ergänzend kann das Bodenreinigungsgerät handgeführt sein.

Die eingangs genannte Aufgabe wird durch ein erfindungsgemäßes Verfahren mit den Merkmalen des unabhängigen Anspruches 15 gelöst.

Die Vorteile, die bereits im Zusammenhang mit der Erläuterung des erfindungsgemäßen Bodenreinigungsgerätes erwähnt wurden, können unter Ausübung des erfindungsgemäßen Verfahrens ebenfalls erzielt werden. Diesbezüglich kann auf die voranstehenden Ausführungen verwiesen werden.

Vorteilhafte Ausführungsbeispiele des Verfahrens ergeben sich durch vorteilhafte Ausführungsformen des erfindungsgemäßen Bodenreinigungsgerätes. Auch diesbezüglich kann auf die voranstehenden Ausführungen verwiesen werden.

Die nachfolgende Beschreibung bevorzugter Ausführungsformen der Erfindung dient im Zusammenhang mit der Zeichnung der näheren Erläuterung der Erfindung. Es zeigen:
- Figur 1:: schematisch die Draufsicht auf ein erfindungsgemäßes Bodenreinigungsgerät beim Reinigen einer Bodenfläche;
- Figur 2:: eine Darstellung entsprechend Figur 1 bei einer andersartigen Bodenfläche;
- Figur 3:: ein schematisches Blockdiagramm des Bodenreinigungsgerätes aus Figur 1;
- Figur 4:: eine schematische Darstellung eines Sende- und Empfangsmoduls einer Spektroskopieeinrichtung des Bodenreinigungsgerätes aus Figur 1;
- Figur 5:: schematisch die Ausleuchtung eines Bereiches der Bodenfläche mit dem Sende- und Empfangsmodul aus Figur 4;
- Figur 6:: Spektren von Bereichen der Bodenfläche, die mit der Spektroskopieeinrichtung des Bodenreinigungsgerätes aus Figur 1 gewonnen wurden, wobei als Abszisse die Wellenlänge in willkürlichen Einheiten und als Ordinate die Signalstärke in willkürlichen Einheiten dargestellt ist; und
- Figur 7:: eine weitere bevorzugte Ausführungsform eines erfindungsgemäßen Bodenreinigungsgerätes in schematischer Ansicht, geführt durch eine Bedienperson.

Nachfolgend wird auf vorteilhafte Ausführungsformen eines erfindungsgemä-ßen Bodenreinigungsgerätes eingegangen, mit dem vorteilhafte Ausführungsbeispiele des erfindungsgemäßen Verfahrens durchführbar sind.

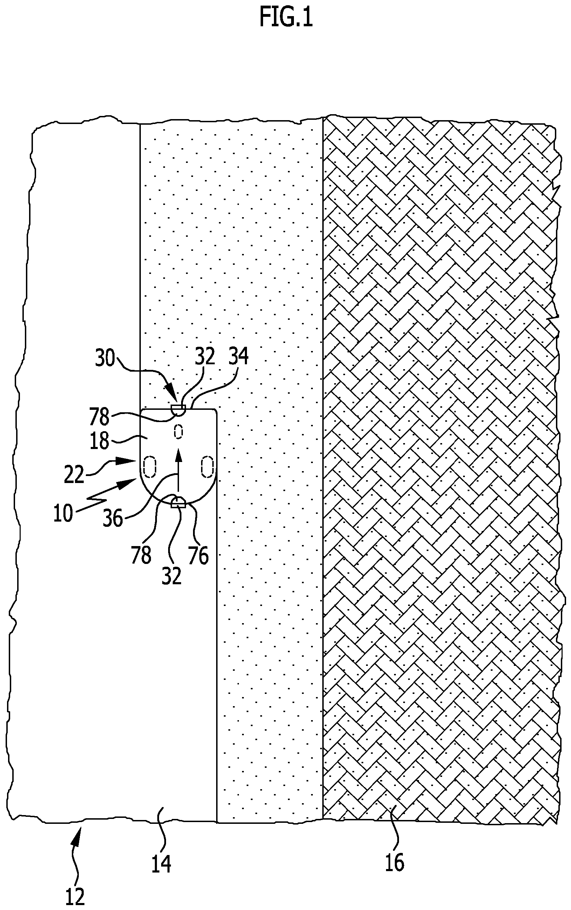

Figur 1 zeigt in schematischer Draufsicht ein mit dem Bezugszeichen 10 belegtes erfindungsgemäßes Bodenreinigungsgerät. Das Bodenreinigungsgerät 10 ist selbstfahrend und selbstlenkend ausgestaltet und erlaubt die autonome Reinigung einer Bodenfläche 12.

Die Bodenfläche 12 ist bei dem in Figur 1 dargestellten Beispiel in zwei Bodenflächenbereiche 14 und 16 unterteilt, die unterschiedliche Bodentypen aufweisen. Beispielsweise weist der Bodenflächenbereich 14 einen Kunststoffbelag auf, zum Beispiel aus PVC. Der Bodenflächenbereich 16 ist beispielsweise ein Parkettboden.

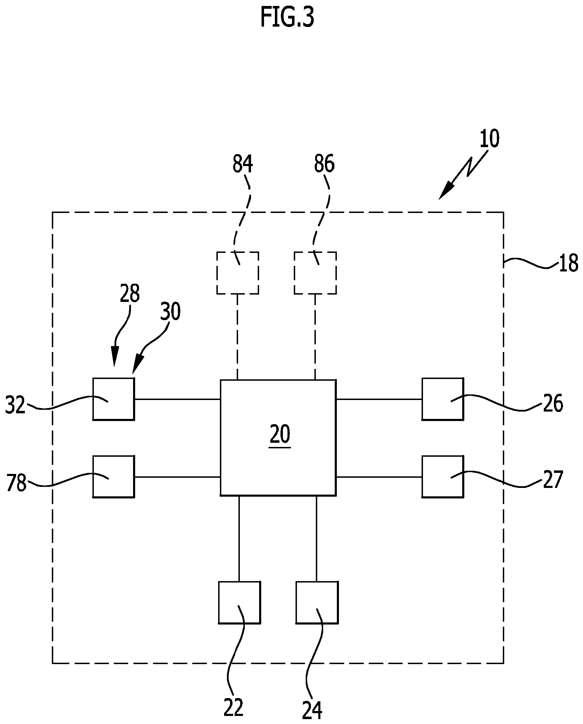

Das Bodenreinigungsgerät 10 (Figuren 1 und 3) umfasst ein Gehäuse 18, in dem eine Steuereinheit 20 aufgenommen ist. Ein von der Steuereinheit 20 ansteuerbares Fahrwerk 22 umfasst zwei Antriebsräder, über die das Bodenreinigungsgerät 10 auf der Bodenfläche 12 verfahren werden kann. Das Bodenreinigungsgerät 10 verfährt dabei beispielsweise anhand eines vorgegebenen Fahrmusters. Figur 1 symbolisiert eine streifen- oder mäanderartige Fahrt des Bodenreinigungsgerätes 10, wobei noch nicht überfahrene und gereinigte Bereiche der Bodenfläche 12 durch Punktierung hervorgehoben sind, wohingegen bereits gereinigte Bereiche diese Punktierung nicht aufweisen.

Das Bodenreinigungsgerät 10 weist mindestens ein Reinigungsaggregat 24 auf, das insbesondere von der Steuereinheit 20 ansteuerbar ist. Als Reinigungsaggregat ist zum Beispiel eine Reinigungsbürste vorgesehen und/oder ein Saugaggregat. Schmutz kann von der Bodenfläche 12 mittels der Reinigungsbürste aufgenommen und unter der zusätzlichen Wirkung des Saugaggregates in einen Schmutzsammelbehälter im Gehäuse 18 überführt werden.

Als Reinigungsaggregat 24 wird vorliegend auch ein Behälter mit Auslassventil für eine Reinigungsflüssigkeit angesehen, beispielsweise Wasser oder eine Reinigungschemikalie zur Steigerung der Reinigungswirkung. Aus dem Behälter kann die Reinigungsflüssigkeit zur Benetzung auf die Bodenfläche 12 aufgebracht werden. Die Menge an Reinigungsflüssigkeit kann über die Steuereinheit 20 eingestellt und damit dosiert werden.

Ferner umfasst das Bodenreinigungsgerät 10 eine mit der Steuereinheit 20 gekoppelte Speichereinheit 26. In der Speichereinheit 26 ist zum Beispiel eine Karte der Bodenfläche 12 gespeichert, die es dem Bodenreinigungsgerät 10 erlaubt, anhand des Fahrweges oder Fahrtmusters über die Bodenfläche 12 zu navigieren. Sämtliche dem Fachmann bekannte Navigationsmethoden sind dabei denkbar. Ein mit der Steuereinheit 20 gekoppeltes Lokalisierungsglied 27 ist vorgesehen, um die Position des Bodenreinigungsgerätes 10 relativ zur Bodenfläche 12 zu ermitteln, in einem relativen und/oder absoluten Bezugssystem.

Beim erfindungsgemäßen Bodenreinigungsgerät 10 besteht die Möglichkeit, den Bodentyp der Bodenfläche 12 mittels einer optischen Detektionseinrichtung 28 zu ermitteln. Dabei kann insbesondere unterschieden werden, ob der Bodenbelag ein Kunststoffbelag ist, ein Laminat, ein Parkett, ein Teppich oder Teppichboden oder ein Fliesenbelag. Zur Ermittlung des Bodentyps kann insbesondere das Bodenmaterial detektiert werden. Vorzugsweise können auch unterschiedliche Materialien von Kunststoff, Laminat, Parkett, Teppich oder Teppichboden sowie Fliesen voneinander unterschieden werden. Die Ermittlung des Bodentyps dient dazu, Reinigungsparameter und Verfahrparameter des Bodenreinigungsgerätes 10 im Hinblick auf eine optimierte Bodenreinigung einzustellen.

Die Detektionseinrichtung 28 ist beim Bodenreinigungsgerät 10 als Spektroskopieeinrichtung 30 ausgestaltet, mit der ein Spektrum der Bodenfläche 12 aufgenommen und zur Ermittlung des Bodentyps ausgewertet werden kann.

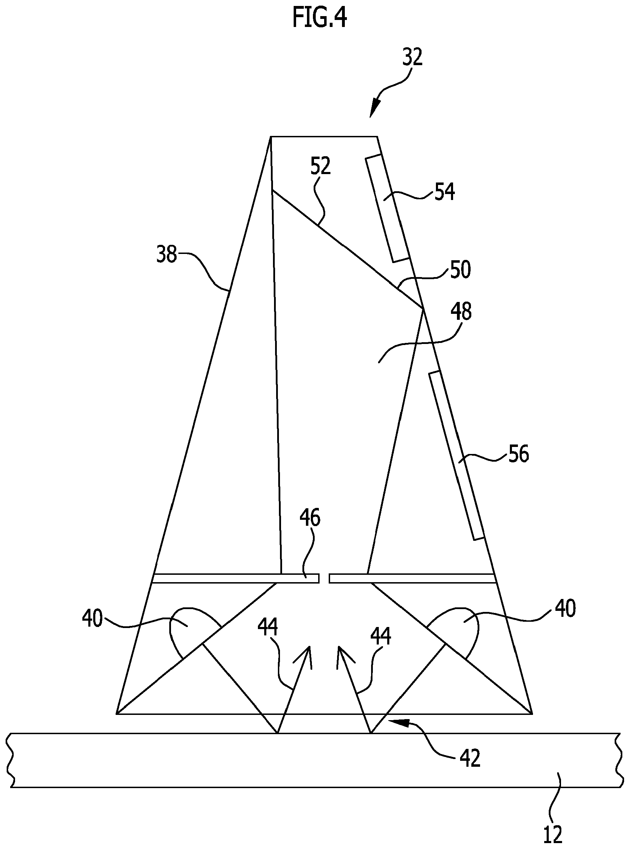

Die Spektroskopieeinrichtung 30 weist mindestens ein in Figur 4 schematisch dargestelltes Sende- und Empfangsmodul 32 auf. Das Sende- und Empfangsmodul 32 ist vorliegend an einer Vorderseite 34 des Bodenreinigungsgerätes 10 angeordnet, bezogen auf dessen Hauptbewegungsrichtung 36. Entlang der Hauptbewegungsrichtung 36 wird das Bodenreinigungsgerät 10 bei geradliniger Geradeausfahrt verfahren.

Das Sende- und Empfangsmodul 32 umfasst ein Gehäuse 38, das beispielsweise in einer korrespondierenden Aufnahme des Gehäuses 18 aufgenommen ist. Am unteren Bereich des Gehäuses 38 sind mehrere Leuchtelemente 40 zur Emission von Licht in Richtung der Bodenfläche 12 angeordnet. Die Leuchtelemente 40 sind vorliegend ausgestaltet als Leuchtdioden. Günstig ist es, wenn die Leuchtelemente 40 Licht unterschiedlichen Spektrums emittieren können, wobei sich die Wellenlängen vorteilhafterweise vom UV-Bereich in den NIR-Bereich erstrecken können (ca. 400 nm bis ca. 1100 nm).

Bei einer vorteilhaften Ausführungsform des Bodenreinigungsgerätes 10 kann vorgesehen sein, dass die Leuchtelemente 40 identisch ausgestaltet sind und insbesondere Licht im NIR-Bereich emittieren, beispielsweise ungefähr 700 nm bis ungefähr 1100 nm.

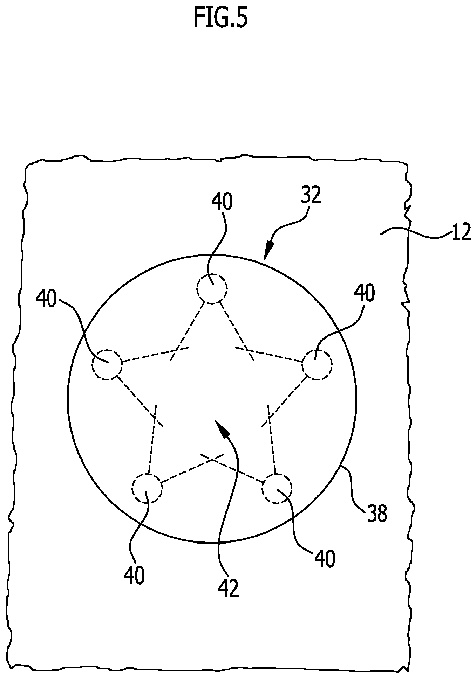

Vorliegend sind die Leuchtelemente 40 ringförmig angeordnet und emittieren Licht auf einen zentral zwischen ihnen gelegenen Bereich 42 der Bodenfläche 12 (Figuren 4 und 5). Licht, das von den Leuchtelementen 40 ausgesandt wird, wird von der Bodenfläche 12 reflektiert. Der Pfad des Lichts ist in Figur 4 schematisch mittels Pfeilen 44 dargestellt.

Reflektiertes Licht passiert eine oberhalb der Leuchtelemente 40 angeordnete Blende 46 und gelangt in einen vom Gehäuse 38 umschlossenen Raum 48. Im Raum 48 ist ein Element zur spektralen Zerlegung des einfallenden Lichtes angeordnet. Dieses Element ist vorliegend als diffraktives optisches Element 50 ausgebildet, vorliegend in Gestalt eines Transmissionsgitters 52. Alternativ kann ein refraktives optisches Element eingesetzt werden, beispielsweise ein Prisma.

Das vom Transmissionsgitter 52 spektral zerlegte Licht gelangt auf ein Empfangselement 54. Das Empfangselement 54 ist beispielsweise als Zeilendetektor oder als Felddetektor (Array) ausgestaltet. Ein Ausgangssignal des Empfangselementes 54 kann einem Datenverarbeitungselement 56 des Sende-und Empfangsmoduls 32 bereitgestellt werden. Das Datenverarbeitungselement 56 steht mit der Steuereinheit 20 signalwirksam in Verbindung. Alternativ kann ein Ausgangssignal des Empfangselementes 54 direkt an die Steuereinheit 20 übermittelt werden. Die Steuereinheit 20 ist somit vorliegend Bestandteil der Spektroskopieeinrichtung 30.

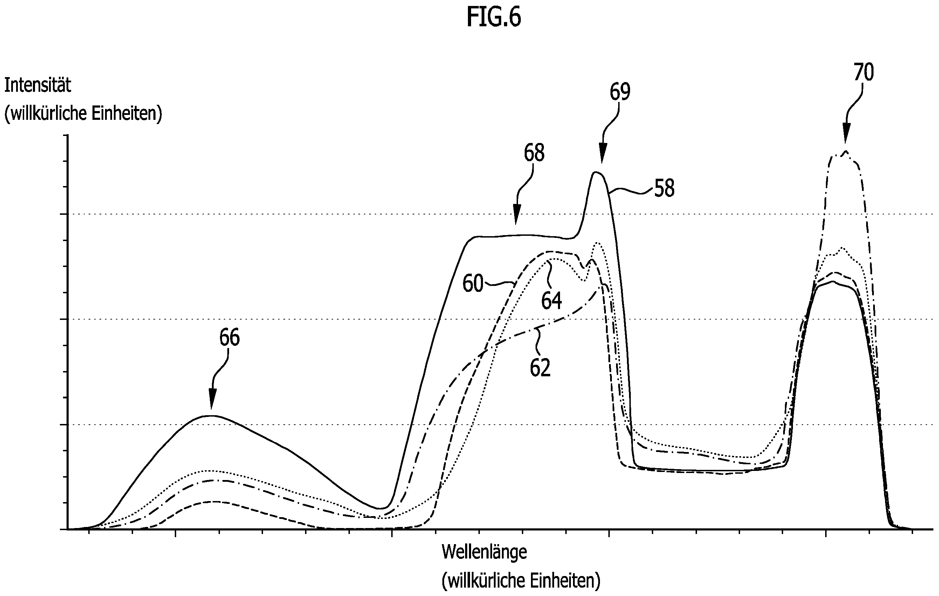

Figur 6 zeigt beispielhaft und schematisch vier Spektren, die von unterschiedlichen Bodentypen der Bodenfläche 12 von der Spektroskopieeinrichtung 30 erstellt wurden. Durch Auswertung der Spektren kann die Steuereinheit 20 den jeweiligen Bodentyp ermitteln. In Figur 6 zeigt die Abszisse die Wellenlänge in willkürlichen Einheiten und die Ordinate die Intensität des vom Empfangselement empfangenen Lichtes, ebenfalls in willkürlichen Einheiten. Ein erstes Spektrum, dargestellt mittels einer durchgezogenen Linie 58, stammt von einem Boden mit Kunststoffmaterial, beispielsweise PVC. Ein zweites Spektrum, dargestellt mittels einer gestrichelten Linie 60, stammt von einem Parkettboden. Ein drittes Spektrum, dargestellt mittels einer strichpunktierten Linie 62, stammt von einem Teppichboden. Ein viertes Spektrum, dargestellt mittels einer gepunkteten Linie 64, stammt von einem Fliesenboden.

In der beispielhaften Darstellung von Figur 6 ist erkennbar, dass alle Spektren 58, 60, 62 und 64 im Wesentlichen drei charakteristische Strukturen umfassen, eine Struktur 66 im Bereich eher geringer Wellenlänge, eine Struktur 68 im Bereich einer mittleren Wellenlänge und eine Struktur 70 im Bereich eher größerer Wellenlänge. Allerdings unterscheiden sich die Strukturen 66, 68 und 70 hinsichtlich Intensität, Form und Breite deutlich voneinander.

Zum Ermitteln des Bodentyps kann die Steuereinheit 20 die Spektren 58, 60, 62 und 64 auswerten in Bezug auf das Auftreten charakteristischer Strukturen 66, 68, 70 bei vorgegebener Wellenlänge, in Bezug auf absolute Intensität mindestens einer charakteristischen Struktur 66, 68, 70, in Bezug auf relative Intensität und/oder Position von zwei oder mehr charakteristischen Strukturen 66, 68, 70 zueinander und/oder in Bezug auf die Form mindestens einer charakteristischen Struktur 66, 68 und 70.

Im vorliegenden Fall zeichnet sich das Spektrum 60 beispielsweise durch eine verhältnismäßig breite Struktur 68 und eine verhältnismäßig hohe Struktur 66 aus. Die Struktur 68 umfasst ferner eine prägnante Substruktur 69. Dies erlaubt es, das Spektrum 58 von den anderen Spektren 60, 62, 64 zu unterscheiden.

Die Spektren 60 und 64 ähneln einander in Bezug auf die Form der Struktur 68, jedoch ist die Substruktur 69 bei dem Spektrum 64 prägnanter ausgeprägt. Ferner umfasst das Spektrum 64 eine höhere Intensität im Bereich der Struktur 66. Auf diese Weise können die Spektren 60 und 64 voneinander unterschieden werden.

Das Spektrum 62 überragt die Spektren 58, 60 und 64 im Bereich der Struktur 70 erheblich und weist überdies hinsichtlich Form und Breite der Struktur 68 deutliche Unterschiede zu den Spektren 58, 60 und 64 auf, so dass auch eine Identifikation des Spektrums 62 möglich ist.

In der Speichereinheit 26 sind mit einem jeweiligen Bodentyp und insbesondere Bodenmaterial verknüpft Informationen über die jeweils zu erwartenden charakteristischen Strukturen 66, 68, 70 gespeichert. Durch Vergleich der Ergebnisse der Auswertung mit den gespeicherten Informationen kann die Steuereinheit 20 den Bodentyp eindeutig ermitteln.

Alternativ oder ergänzend können in der Speichereinheit 20 Referenzspektren mit einem jeweiligen Bodentyp und insbesondere Bodenmaterial verknüpft gespeichert sein. Durch einen Vergleich eines gewonnenen Spektrums 58, 60, 62 oder 64 mit den Referenzspektren kann auf den Bodentyp geschlossen werden.

Abhängig vom ermittelten Bodentyp kann das Bodenreinigungsgerät 10 zur Optimierung der Reinigung Reinigungsparameter des mindestens einen Reinigungsaggregates 24 wie vorstehend erläutert anpassen. Alternativ oder ergänzend können Verfahrparameter des Bodenreinigungsgerätes 10 durch Ansteuern des Fahrwerks 22 angepasst werden. Beispielsweise wird die Fahrgeschwindigkeit, die Fahrstrecke, oder das Fahrtmuster angepasst.

Wird ein Bodentyp ermittelt, der nicht gereinigt werden soll, kann die Fahrstrecke zum Umfahren des entsprechenden Bodenflächenbereiches angepasst werden. Alternativ ist ein Überfahren des Bodenflächenbereiches denkbar, ohne Einsatz eines Reinigungsaggregates 24.

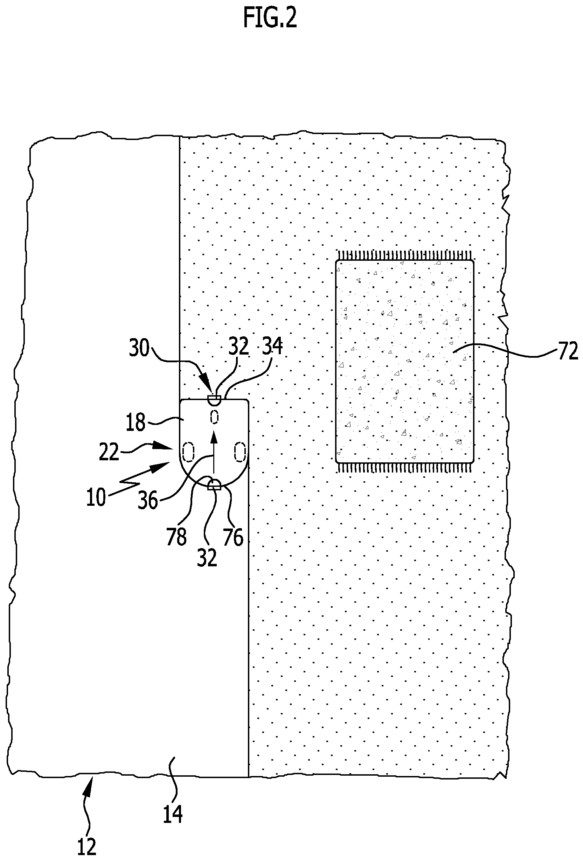

Figur 2 zeigt schematisch eine von der Figur 1 unterschiedliche Situation, bei der die Bodenfläche 12 den Bodenflächenbereich 14 beispielsweise mit einem Kunststoffboden umfasst sowie einen auf diesem positionierten Teppich 72. Es wird angenommen, dass der Bodenflächenbereich 14 gekehrt, gesaugt und feucht gereinigt werden soll, wohingegen der Teppich 72 nur gekehrt und gesaugt werden soll, nicht aber feucht gereinigt.

Anhand der Informationen der Spektroskopieeinrichtung 30 kann der Teppich 72 erkannt und das mindestens eine Reinigungsaggregat 24 dahingehend angesteuert werden, dass während der Überfahrt über den Teppich 72 keine Reinigungsflüssigkeit austritt, sondern lediglich eine Trockenreinigung mit Kehren und Saugen erfolgt.

Die Karte der Bodenfläche 12 in der Speichereinheit 26 kann mit einer positionsabhängigen Information zum ermittelten Bodentyp gespeichert werden. Bei späteren Reinigungen der Bodenfläche 12 unter Berücksichtigung der Karte kennt das Bodenreinigungsgerät 10 den Bodentyp und kann eine Voreinstellung von Reinigungsparametern und/oder Verfahrparametern vornehmen. Während der Reinigung kann dann eine Kontrolle des Bodentyps durchgeführt werden.

Beim Bodenreinigungsgerät 10 besteht vorteilhafterweise die Möglichkeit, mit der Spektroskopieeinrichtung 30 Art, Menge und/oder Position einer Verschmutzung der Bodenfläche 12 zu detektieren. Zu diesem Zweck können die Spektren der Spektroskopieeinrichtung 30 auf das Vorhandensein einer spektralen Signatur einer Verschmutzung analysiert werden. Bei Auffinden einer charakteristischen spektralen Signatur einer Verschmutzung können Reinigungsparameter und/oder Verfahrparameter des Bodenreinigungsgerätes 10 zur Optimierung der Reinigung angepasst werden.

Das Bodenreinigungsgerät 10 kann ferner ein weiteres Sende- und Empfangsmodul 32 aufweisen, das beispielsweise an einer Rückseite 76 des Bodenreinigungsgerätes 10 angeordnet ist. Mit dem Sende- und Empfangsmodul 32 kann hinter dem Bodenreinigungsgerät 10 nach erfolgter Reinigung eine Untersuchung der Bodenfläche 12 auf Art, Menge und/oder Position einer Verschmutzung und Reinigungsmittelrückstand vorgenommen werden.

Ferner kann das Bodenreinigungsgerät 10 mindestens eine Kamera 78 umfassen, mit der Bilder der Bodenfläche 12 erstellt werden können. Die Bilder können beispielsweise von der Steuereinheit 20 mittels Methoden der Bildverarbeitung ausgewertet werden. Vorliegend sind eine erste Kamera 78 an der Vorderseite 34 und eine weitere Kamera 78 an der Rückseite 76 vorhanden. Die Kamera 78 an der Vorderseite 34 ist auf einen dem Bodenreinigungsgerät 10 vorgelagerten Bereich der Bodenfläche 12 gerichtet und die Kamera 78 an der Rückseite 76 auf einen hinter dem Bodenreinigungsgerät 10 gelegenen Bereich der Bodenfläche 12.

Bilder, die von der Kamera 78 an der Vorderseite 34 erstellt werden, können ausgewertet werden, um den Bodentyp der Bodenfläche 12 zu ermitteln. Eine dabei getroffene Feststellung kann auf Übereinstimmung mit dem anhand der Spektroskopieeinrichtung 30 ermittelten Bodentyp überprüft werden. Dies erlaubt es, eine noch zuverlässigere Aussage über den Bodentyp zu treffen, um die Reinigung zu verbessern.

Darüber hinaus kann die Bodenfläche 12 mittels der Kamera 78 an der Vorderseite 34 auf Art, Menge und/oder Position von Verschmutzungen untersucht werden. In entsprechender Weise kann die Bodenfläche 12 nach erfolgter Reinigung mittels der Kamera 78 an der Rückseite 76 auf verbleibende Verschmutzungen und Reinigungsmittelrückstand untersucht werden.

Werden nach der Reinigung Verschmutzungen mittels der Spektroskopieeinrichtung 30 oder anhand der Bilder der Kamera 78 festgestellt, kann eine erneute Reinigung der Bodenfläche 12, zumindest abschnittsweise, durchgeführt werden. Rückstände von Reinigungsmittel, beispielsweise Wasser, können beispielsweise abgesaugt oder aufgewischt werden.

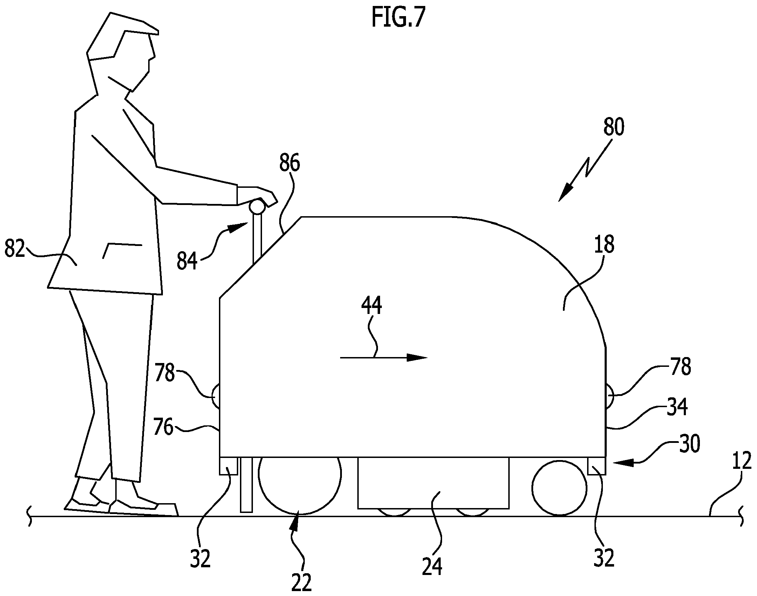

Figur 7 zeigt schematisch eine weitere bevorzugte Ausführungsform eines erfindungsgemäßen Bodenreinigungsgerätes, belegt mit dem Bezugszeichen 80. Für gleiche oder gleichwirkende Merkmale und Bauteile der Bodenreinigungsgeräte 10, 80 werden identische Bezugszeichen benutzt. Es wird lediglich auf die wesentlichen Unterschiede eingegangen.

Das Bodenreinigungsgerät 80 ist ein handgeführtes Bodenreinigungsgerät, das von einer Bedienperson 82 über die Bodenfläche 12 verfahren werden kann. Ergänzend kann vorgesehen sein, dass das Bodenreinigungsgerät 80 selbstfahrend und selbstlenkend ausgestaltet ist.

Beim Bodenreinigungsgerät 80 ist für die Bedienperson 12 eine Bedieneinheit 84 vorgesehen und eine Hinweiseinheit 86, beispielsweise eine optische Anzeigeeinheit. Die Bedieneinheit 84 und die Hinweiseinheit 86 sind in Figur 3 gestrichelt dargestellt. Insoweit entspricht das schematische Blockdiagramm von Figur 3 auch einem schematischen Blockdiagramm des Bodenreinigungsgerätes 80.

Die Bedienperson 82 kann das Bodenreinigungsgerät 80 über die Bedieneinheit 84 bedienen. An der Hinweiseinheit 86 können der Bedienperson 82 Informationen insbesondere über den ermittelten Bodentyp und bevorzugt auch über Verschmutzungen der Bodenfläche 12 angezeigt werden.

Das Bodenreinigungsgerät 80 kann abhängig vom ermittelten Bodentyp beispielsweise Reinigungsparameter und/oder Verfahrparameter selbsttätig einstellen und/oder der Bedienperson 82 einen diesbezüglichen Vorschlag an der Hinweiseinheit 86 unterbreiten. Die Bedienperson 82 kann diesen Vorschlag übernehmen oder, falls erforderlich, mittels der Bedieneinheit 84 abändern.

### Bezugszeichen

- 10: Bodenreinigungsgerät
- 12: Bodenfläche
- 14, 16: Bodenflächenbereich
- 18: Gehäuse
- 20: Steuereinheit
- 22: Fahrwerk
- 24: Reinigungsaggregat
- 26: Speichereinheit
- 27: Lokalisierungseinheit
- 28: Detektionseinrichtung
- 30: Spektroskopieeinrichtung
- 32: Sende- und Empfangsmodul
- 34: Vorderseite
- 36: Hauptbewegungsrichtung
- 38: Gehäuse
- 40: Leuchtelement
- 42: Bereich
- 44: Pfad des Lichts
- 46: Blende
- 48: Raum
- 50: diffraktives optisches Element
- 52: Transmissionsgitter
- 54: Empfangselement
- 56: Datenverarbeitungselement
- 58, 60, 62, 64: Spektrum
- 66, 68, 70: Struktur
- 69: Substruktur
- 72: Teppich
- 76: Rückseite
- 78: Kamera
- 80: Bodenreinigungsgerät
- 82: Bedienperson
- 84: Bedieneinheit
- 86: Hinweiseinheit

## Patentansprüche

1. Bodenreinigungsgerät, das mindestens ein Reinigungsaggregat (24) zum Reinigen einer Bodenfläche (12) und eine optische Detektionseinrichtung (28) umfasst, mit der ein Bodentyp ermittelbar ist, wobei die Detektionseinrichtung (28) als Spektroskopieeinrichtung (30) ausgestaltet ist oder eine solche umfasst, mit der der Bodentyp anhand eines in Reflexion aufgenommenen Spektrums (58, 60, 62, 64) der Bodenfläche (12) ermittelbar ist, und wobei die Spektroskopieeinrichtung (30) mindestens ein optisches Leuchtelement (40) zur Emission von auf die Bodenfläche (12) gerichtetem Licht aufweist, **dadurch gekennzeichnet, dass** die Spektroskopieeinrichtung (30) mindestens ein diffraktives oder refraktives Element (50) zur spektralen Zerlegung reflektierten Lichtes umfasst, wobei das Licht mittels mindestens eines Empfangselementes (54) detektierbar ist, und dass zur Auswertung des Spektrums (58, 60, 62, 64) charakteristische Merkmale desselben anhand einer relativen Intensität und/oder Position von zwei oder mehr charakteristischen Strukturen (66, 68, 70) zueinander festgestellt werden.

2. Bodenreinigungsgerät nach Anspruch 1, **dadurch gekennzeichnet, dass** abhängig vom ermittelten Bodentyp zumindest eines der Folgenden vom Bodenreinigungsgerät (10; 80) zur Anpassung der Reinigung an die Bodenfläche (12) einstellbar ist:
- Reinigungsparameter wie Einsatz und/oder Art mindestens eines Reinigungsaggregates (24), Reinigungsintensität, Menge und/oder Art von Reinigungsmittel(n);
- Verfahrparameter wie Fahrgeschwindigkeit des Bodenreinigungsgerätes (10; 80), Fahrstrecke, Fahrmuster, Umfahren oder Vermeiden von Bodenflächenbereichen mit vorgegebenem Bodentyp.

3. Bodenreinigungsgerät nach Anspruch 1 oder 2, **dadurch gekennzeichnet, dass** an einer Hinweiseinheit (86) eine Information an eine Bedienperson (82) betreffend den Bodentyp ausgebbar ist.

4. Bodenreinigungsgerät nach einem der voranstehenden Ansprüche, **dadurch gekennzeichnet, dass** zur Auswertung des Spektrums (58, 60, 62, 64) charakteristische Merkmale desselben anhand mindestens eines weiteren der Folgenden festgestellt werden:
- Auftreten charakteristischer Strukturen (66, 68, 70) bei vorgegebener Energie und/oder Wellenlänge;
- absolute Intensität mindestens einer charakteristischen Struktur (66, 68, 70);
- Form mindestens einer charakteristischen Struktur (66, 68, 70).

5. Bodenreinigungsgerät nach einem der voranstehenden Ansprüche, **dadurch gekennzeichnet, dass** mindestens ein Leuchtelement (40) der Spektroskopieeinrichtung (30), bezogen auf eine Hauptbewegungsrichtung (36) des Bodenreinigungsgerätes (10; 80), an dessen Vorderseite (34) angeordnet ist, zur Ermittlung des Bodentyps eines in der Hauptbewegungsrichtung (36) vorgelagerten Bereiches der Bodenfläche (12).

6. Bodenreinigungsgerät nach einem der voranstehenden Ansprüche, **dadurch gekennzeichnet, dass** der Bodentyp durch Bestimmung des Bodenmaterials ermittelbar ist.

7. Bodenreinigungsgerät nach einem der voranstehenden Ansprüche, **dadurch gekennzeichnet, dass** die Spektroskopieeinrichtung mindestens ein Sende- und Empfangsmodul (32) umfasst, das das mindestens eine Leuchtelement (40), das mindestens eine Empfangselement (54) und das mindestens eine diffraktive oder refraktive Element (50) in einem gemeinsamen Gehäuse (38) angeordnet umfasst.

8. Bodenreinigungsgerät nach Anspruch 7, **dadurch gekennzeichnet, dass** zumindest eines der Folgenden gilt:
- das mindestens eine Leuchtelement (40) ist oder umfasst eine Leuchtdiode;
- als diffraktives Element (50) ist ein optisches Transmissionsgitter (52) oder Reflexionsgitter oder als refraktives Element ein Prisma vorgesehen;
- das mindestens eine Leuchtelement (40) ist zur Emission von Licht im UV-Bereich, im Bereich des sichtbaren Spektrums und/oder im NIR-Bereich ausgebildet;
- eine Mehrzahl von Leuchtelementen (40) ist vorgesehen, die Licht unterschiedlicher Wellenlänge emittieren;
- eine Mehrzahl von ringförmig angeordneten Leuchtelementen (40) ist vorgesehen, die Licht auf einen zentral zwischen ihnen gelegenen Bereich (42) der Bodenfläche (12) emittieren.

9. Bodenreinigungsgerät nach einem der voranstehenden Ansprüche, **dadurch gekennzeichnet, dass** die Spektroskopieeinrichtung (30) eine Speichereinheit (26) umfasst oder mit einer Speichereinheit (26) gekoppelt ist, in der mit einem jeweiligen Bodentyp und insbesondere Bodenmaterial verknüpft Informationen gespeichert sind, durch deren Vergleich mit dem Spektrum (58, 60, 62, 64) oder charakteristischen Merkmalen desselben der Bodentyp ermittelbar ist.

10. Bodenreinigungsgerät nach Anspruch 9, **dadurch gekennzeichnet, dass** das Bodenreinigungsgerät (10; 80) eine Lokalisierungseinheit (27) umfasst zum Ermitteln der Position des Bodenreinigungsgerätes (10; 80) relativ zur Bodenfläche (12) und dass in der Speichereinheit (26) eine Karte der Bodenfläche (12) verknüpft mit einer positionsabhängigen Information zum Bodentyp gespeichert oder speicherbar ist.

11. Bodenreinigungsgerät nach einem der voranstehenden Ansprüche, **dadurch gekennzeichnet, dass** das Bodenreinigungsgerät (10; 80) mindestens eine Kamera (78) zum Erstellen von Bildern der Bodenfläche (12) umfasst und dass anhand der Bilder der Bodentyp ermittelbar und auf Übereinstimmung mit dem anhand der Spektroskopieeinrichtung (30) ermittelten Bodentyp überprüfbar ist.

12. Bodenreinigungsgerät nach einem der voranstehenden Ansprüche, **dadurch gekennzeichnet, dass** mittels der Spektroskopieeinrichtung (30) die Position, Menge und/oder Art einer Verschmutzung der Bodenfläche (12) anhand einer spektralen Signatur der Verschmutzung ermittelbar ist.

13. Bodenreinigungsgerät nach Anspruch 12, **dadurch gekennzeichnet, dass** eine Detektionseinrichtung (28) und/oder eine Kamera (78) zum Erstellen von Bildern der Bodenfläche, bezogen auf eine Hauptbewegungsrichtung (36) des Bodenreinigungsgerätes, dem mindestens einen Reinigungsaggregat (24) nachgelagert angeordnet ist, um anhand der Position, Menge und/oder Art einer möglichen Verschmutzung und/oder von Reinigungsmittelrückständen das Reinigungsergebnis zu überprüfen.

14. Bodenreinigungsgerät nach einem der voranstehenden Ansprüche, **dadurch gekennzeichnet, dass** das Bodenreinigungsgerät (10; 80) ein selbstlenkendes und selbstfahrendes Bodenreinigungsgerät (10; 80) ist und/oder ein handgeführtes Bodenreinigungsgerät (80).

15. Verfahren zum Reinigen einer Bodenfläche mit einem Bodenreinigungsgerät, wobei mittels einer Spektroskopieeinrichtung des Bodenreinigungsgerätes ein Bodentyp anhand eines in Reflexion aufgenommenen Spektrums ermittelt wird, und wobei die Information über den Bodentyp der Reinigung der Bodenfläche zugrunde gelegt wird, wobei mit mindestens einem optischen Leuchtelement der Spektroskopieeinrichtung auf die Bodenfläche gerichtetes Licht emittiert wird, **dadurch gekennzeichnet, dass** mit mindestens einem diffraktiven oder refraktiven Element reflektiertes Licht spektral zerlegt wird, wobei das Licht mittels mindestens eines Empfangselementes detektiert wird, und dass zur Auswertung des Spektrums charakteristische Merkmale desselben anhand einer relativen Intensität und/oder Position von zwei oder mehr charakteristischen Strukturen zueinander festgestellt werden.

## Claims

1. Floor cleaning appliance which comprises at least one cleaning assembly (24) for cleaning a floor surface (12) and an optical detection device (28) with which a floor type is determinable, wherein the detection device (28) is configured as or comprises a spectroscopic device (30) with which the floor type is determinable on the basis of a spectrum (58, 60, 62, 64) of the floor surface (12) recorded by reflection measurement, and wherein the spectroscopic device (30) has at least one optical illuminating element (40) for emitting light directed at the floor surface (12) **characterized in that** the spectroscopic device comprises at least one diffractive or refractive element (50) for spectrally decomposing reflected light, wherein the light is detectable by means of at least one receiving element (54), and that for evaluating the spectrum (58, 60, 62, 64), characteristic features of the same are determined on the basis of relative intensity and/or position of two or more characteristic structures (66, 68, 70) to each other.

2. Floor cleaning appliance in accordance with Claim 1, **characterized in that** at least one of the following is settable by the floor cleaning appliance (10; 80) in dependence on the determined floor type for adapting the cleaning to the floor surface (12):
- cleaning parameters like use and/or kind of at least one cleaning assembly (24), cleaning intensity, amount and/or kind of cleaning agent(s);
- travel parameters like speed of the floor cleaning appliance (10; 80), route, travel pattern, bypassing or avoiding floor surface regions with a predetermined floor type.

3. Floor cleaning appliance in accordance with Claim 1 or 2, **characterized in that** information is outputtable at an indication unit (86) to a user (82) regarding the floor type.

4. Floor cleaning appliance in accordance with any one of the preceding Claims, **characterized in that**, for evaluating the spectrum (58, 60, 62, 64), characteristic features thereof are determined on the basis of at least one further of the following:
- occurrence of characteristic structures (66, 68, 70) with predetermined energy and/or wavelength;
- absolute intensity of at least one characteristic structure (66, 68, 70);
- shape of at least one characteristic structure (66, 68, 70).

5. Floor cleaning appliance in accordance with any one of the preceding Claims, **characterized in that** at least one illuminating element (40) of the spectroscopic device (30), in relation to a main movement direction (36) of the floor cleaning appliance (10; 80), is arranged on the front side (34) thereof, for determining the floor type of a region of the floor surface (12) arranged upstream in the main movement direction (36).

6. Floor cleaning appliance in accordance with any one of the preceding Claims, **characterized in that** the floor type is determinable by determining the floor material.

7. Floor cleaning appliance in accordance with any one of the preceding Claims, **characterized in that** the spectroscopic device comprises at least one transmitting and receiving module (32) which comprises the at least one illuminating element (40), the at least one receiving element (54), and the at least one diffractive or refractive element (50), arranged in a common housing (38).

8. Floor cleaning appliance in accordance with Claim 7, **characterized in that** at least one of the following applies:
- the at least one illuminating element (40) is or comprises a lightemitting diode;
- an optical transmission grating (52) or reflection grating is provided as a diffractive element (50) or a prism is provided as a refractive element;
- the at least one illuminating element (40) is configured for the emission of light in the UV range, in the range of the visible spectrum, and/or in NIR range;
- a plurality of illuminating element (40) is provided, which emit light of different wavelengths;
- a plurality of annularly arranged illuminating elements (40) is provided, which emit light to a region (42) of the floor surface (12) located centrally between said illuminating elements (40).

9. Floor cleaning appliance in accordance with any one of the preceding Claims, **characterized in that** the spectroscopic device (30) comprises a storage unit (26) or is coupled to a storage unit (26) in which information is stored linked to a respective floor type and in particular floor material, the floor type being determinable by comparison of said information with the spectrum (58, 60, 62, 64) or characteristic features of the same.

10. Floor cleaning appliance in accordance with Claim 9, **characterized in that** the floor cleaning appliance (10; 80) comprises a localization unit (27) for determining the position of the floor cleaning appliance (10; 80) relative to the floor surface (12), and **in that** a map of the floor surface (12) is stored or is storable in the storage unit (26) linked to position-dependent information regarding the floor type.

11. Floor cleaning appliance in accordance with any one of the preceding Claims, **characterized in that** the floor cleaning appliance (10; 80) comprises at least one camera (78) for generating images of the floor surface (12), and **in that** the floor type is determinable on the basis of the images and is able to be checked for agreement with the floor type determined on the basis of the spectroscopic device (30).

12. Floor cleaning appliance in accordance with any one of the preceding Claims, **characterized in that** the position, amount, and/or kind of soiling of the floor surface (12) is determinable by means the spectroscopic device (30) on the basis of a spectral signature of the soiling.

13. Floor cleaning appliance in accordance with Claim 12, **characterized in that** a detection device (28) and/or a camera (78) for generating images of the floor surface is arranged downstream, in relation to a main movement direction (36) of the floor cleaning appliance, of the at least one cleaning assembly (24) in order to check the cleaning result on the basis of the position, amount, and/or kind of possible soiling and/or cleaning agent residue.

14. Floor cleaning appliance in accordance with any one of the preceding Claims, **characterized in that** the floor cleaning appliance (10; 80) is a self-steering and self-propelled floor cleaning appliance (10; 80) and/or a hand-guided floor cleaning appliance (80).

15. Method for cleaning a floor surface with a floor cleaning appliance, wherein a floor type is determined by means of a spectroscopic device of the floor cleaning appliance on the basis of a spectrum recorded by reflection measurement, and wherein the cleaning of the floor surface is based on the information regarding the floor type, wherein by means of at least one optical illuminating element of the spectroscopic device, light directed at the floor surface is emitted, **characterized in that** reflected light is spectrally decomposed by means of at least one diffractive or refractive element, wherein the light is detectable by means of at least one receiving element, and that for evaluating the spectrum, characteristic features of the same are determined on the basis of relative intensity and/or position of two or more characteristic structures to each other.

## Revendications

1. Appareil de nettoyage de sol, qui comprend au moins un groupe de nettoyage (24) pour nettoyer une surface de sol (12) et un dispositif de détection optique (28) avec lequel un type de sol peut être déterminé, dans lequel le dispositif de détection (28) est conçu comme un dispositif de spectroscopie (30) ou comprend un tel dispositif, avec lequel le type de sol peut être déterminé à l'aide d'un spectre (58, 60, 62, 64) de la surface du sol (12) enregistré en réflexion, et dans lequel le dispositif de spectroscopie (30) comporte au moins un élément électroluminescent optique (40) pour l'émission de lumière dirigée sur la surface du sol (12), **caractérisé en ce que** le dispositif de spectroscopie (30) comprend au moins un élément diffractif ou réfractif (50) pour la décomposition spectrale de la lumière réfléchie, dans lequel la lumière est détectable au moyen d'au moins un élément récepteur (54), et **en ce que**, pour l'évaluation du spectre (58, 60, 62, 64), des propriétés caractéristiques de celui-ci sont établies à l'aide d'une intensité relative et/ou d'une position relative de deux ou plusieurs structures caractéristiques (66, 68, 70) les unes par rapport aux autres.

2. Appareil de nettoyage de sol selon la revendication 1, **caractérisé en ce que**, selon le type de sol déterminé, au moins l'un des éléments suivants peut être réglé par l'appareil de nettoyage de sol (10; 80) pour adapter le nettoyage à la surface du sol (12):
- des paramètres de nettoyage comme l'utilisation et/ou le type d'au moins un groupe de nettoyage (24), l'intensité du nettoyage, la quantité et/ou le type d'agent(s) de nettoyage;
- des paramètres de déplacement comme la vitesse de déplacement de l'appareil de nettoyage de sol (10; 80), l'itinéraire de déplacement, le schéma de déplacement, le contournement ou l'évitement de domaines de surface du sol ayant un type de sol prédéterminé.

3. Appareil de nettoyage de sol selon la revendication 1 ou 2, **caractérisé en ce qu'**une information concernant le type de sol peut être délivrée à un opérateur (82) sur une unité de notification (86).

4. Appareil de nettoyage de sol selon l'une des revendications précédentes, **caractérisé en ce que** pour l'évaluation du spectre (58, 60, 62, 64), des propriétés caractéristiques de celui-ci sont établies à l'aide d'au moins un autre des éléments suivants:
- survenue de structures caractéristiques (66, 68, 70) à une énergie et/ou une longueur d'onde prédéterminée;
- intensité absolue d'au moins une structure caractéristique (66, 68, 70);
- forme d'au moins une structure caractéristique (66, 68, 70).

5. Appareil de nettoyage de sol selon l'une des revendications précédentes, **caractérisé en ce qu'**au moins un élément électroluminescent (40) du dispositif de spectroscopie (30) est disposé, par rapport à une direction principale de déplacement (36) de l'appareil de nettoyage de sol (10; 80), sur son côté avant (34), pour déterminer le type de sol d'un domaine de la surface du sol (12) situé en amont dans la direction principale de déplacement (36).

6. Appareil de nettoyage de sol selon l'une des revendications précédentes, **caractérisé en ce que** le type de sol peut être déterminé par détermination du matériau du sol.

7. Appareil de nettoyage de sol selon l'une des revendications précédentes, **caractérisé en ce que** le dispositif de spectroscopie comprend au moins un module émetteur et récepteur (32), qui comprend le au moins un élément électroluminescent (40), le au moins un élément récepteur (54) et le au moins un élément diffractif ou réfractif (50) disposés dans un boîtier commun (38).

8. Appareil de nettoyage de sol selon la revendication 7, **caractérisé en ce qu'**au moins l'un des éléments suivants s'applique:
- le au moins un élément électroluminescent (40) est ou comprend une diode électroluminescente;
- un réseau de transmission optique (52) ou un réseau de réflexion est prévu en tant qu'élément diffractif (50), ou un prisme est prévu en tant qu'élément réfractif;
- le au moins un élément électroluminescent (40) est conçu pour émettre de la lumière dans le domaine UV, dans le domaine du spectre visible et/ou dans le domaine NIR;
- une pluralité d'éléments électroluminescents (40) est prévue, qui émettent de la lumière de longueur d'onde différente;
- une pluralité d'éléments électroluminescents (40) disposés en forme d'anneau est prévue, qui émettent de la lumière sur un domaine (42) de la surface de sol (12) situé au centre entre eux.

9. Appareil de nettoyage de sol selon l'une des revendications précédentes, **caractérisé en ce que** le dispositif de spectroscopie (30) comprend une unité de mémoire (26) ou est couplé à une unité de mémoire (26), dans laquelle des informations associées à un type de sol respectif et en particulier à un matériau de sol sont mémorisées, par la comparaison desquelles avec le spectre (58, 60, 62, 64) ou des propriétés caractéristiques de celui-ci le type de sol peut être déterminé.

10. Appareil de nettoyage de sol selon la revendication 9, **caractérisé en ce que** l'appareil de nettoyage de sol (10; 80) comprend une unité de localisation (27) pour déterminer la position de l'appareil de nettoyage de sol (10; 80) par rapport à la surface du sol (12) et **en ce que** dans l'unité de mémoire (26) une carte de la surface du sol (12) liée à une information sur le type de sol dépendant de la position est mémorisée ou peut être mémorisée.

11. Appareil de nettoyage de sol selon l'une des revendications précédentes, **caractérisé en ce que** l'appareil de nettoyage de sol (10; 80) comprend au moins une caméra (78) pour créer des images de la surface du sol (12) et **en ce que** le type de sol peut être déterminé à l'aide des images et peut être vérifié concernant la conformité avec le type de sol déterminé à l'aide du dispositif de spectroscopie (30).

12. Appareil de nettoyage de sol selon l'une des revendications précédentes, **caractérisé en ce que** la position, la quantité et/ou le type d'une salissure de la surface du sol (12) peuvent être déterminés au moyen du dispositif de spectroscopie (30) à l'aide d'une signature spectrale de la salissure.

13. Appareil de nettoyage de sol selon la revendication 12, **caractérisé en ce qu'**un dispositif de détection (28) et/ou une caméra (78) pour créer des images de la surface du sol, sur la base d'une direction principale de déplacement (36) de l'appareil de nettoyage de sol, sont disposés en aval du au moins un groupe de nettoyage (24), afin de vérifier le résultat du nettoyage à l'aide de la position, de la quantité et/ou du type d'une éventuelle salissure et/ou de résidus de produit de nettoyage.

14. Appareil de nettoyage de sol selon l'une des revendications précédentes, **caractérisé en ce que** l'appareil de nettoyage de sol (10; 80) est un appareil de nettoyage de sol (10; 80) autoguidé et automoteur et/ou un appareil de nettoyage de sol (80) guidé manuellement.

15. Procédé de nettoyage d'une surface de sol avec un appareil de nettoyage de sol, dans lequel un type de sol est déterminé au moyen d'un dispositif de spectroscopie de l'appareil de nettoyage de sol à l'aide d'un spectre enregistré en réflexion, et dans lequel l'information sur le type de sol est utilisée comme base pour nettoyer la surface du sol, dans lequel avec au moins un élément électroluminescent optique du dispositif de spectroscopie, de la lumière dirigée vers la surface du sol est émise, **caractérisé en ce que** la lumière réfléchie avec au moins un élément diffractif ou réfractif est décomposée spectralement, dans lequel la lumière est détectée au moyen d'au moins un élément récepteur, et **en ce que** pour évaluer le spectre, des propriétés caractéristiques de celui-ci sont établies à l'aide d'une intensité relative et/ou d'une position relative de deux ou plusieurs structures caractéristiques les unes par rapport aux autres.
